# EUROPÄISCHE PATENTSCHRIFT

(11) **EP 2 677 250 B1**
(45) Veröffentlichungstag und Bekanntmachung des Hinweises auf die Patenterteilung: **15.10.2014**
(21) Anmeldenummer: 12004711.3
(22) Anmeldetag: 22.06.2012
(51) Int. Cl.: F24J 2/54, F24J 2/14, F24J 2/38, F16K 21/02, F16K 31/06

(54) **Solargenerator und Hydraulik-Regelsitzventil**
Solar generator and hydraulic regulator seat valve
Générateur solaire et soupape à siège de régulation hydraulique

(43) Veröffentlichungstag der Anmeldung: 25.12.2013
(73) Patentinhaber: HAWE Hydraulik SE, 81673 München (DE)
(72) Erfinder: Heusser, Martin, 81245 München (DE); Imlauer, Markus, 81673 München (DE); Nocker, Andreas, 86971 Peiting (DE)
(74) Vertreter: Grünecker, Kinkeldey, Stockmair & Schwanhäusser

(56) Entgegenhaltungen:
- EP-A1- 1 914 458
- EP-A1- 2 455 685
- WO-A1-96/29745
- US-A- 5 232 196
- US-A1- 2011 180 736

## Beschreibung

Die Erfindung betrifft einen Solargenerator gemäß Oberbegriff des Patentanspruchs 1 sowie ein Hydraulik-Regelsitzventil gemäß Oberbegriff des Patentanspruchs 7.

Bei Solargeneratoren hat sich eine Betriebsweise durchgesetzt, bei der die Nachführung schrittweise erfolgt, z.B. indem ein Regelsitzventil jeweils nach etwa 15 Sekunden für wenige Sekunden oder Sekundenbruchteile mit einer Hubbewegung einer Ventilkomponente auf- und wieder zugesteuert wird. Denn eine feinfühlige kontinuierliche Regelung eines sehr kleinen Volumenstroms, wie er zur kontinuierlichen Nachführung benötigt würde, ist bisher mit vertretbarem Kostenaufwand und über lange Standzeit nicht möglich gewesen. Im Falle einer z.B. durchaus 200 m langen Solarrinne als Reflektor des Solargenerators mit einem Absorberrohr im Brennpunktbereich wird das Absorberrohr mit so großem Durchmesser (und wegen des hohen Innendrucks mit großer Wandstärke) gefertigt, dass es trotz der kontinuierlichen Bewegung der Sonne während des Stillstandes des Reflektors zwischen zwei Nachführschritten stets innerhalb des Brennpunktbereiches verbleibt und optimale Leistung erbringt. Bei einem Nachführschritt wird sozusagen das Absorberrohr geringfügig gegenüber der Sonne nach vorne verstellt, und wandert die Sonne während des Stillstandes des Absorberrohres bis knapp zum Ende des Brennpunktbereiches, ehe ein neuer Nachführschritt erfolgt. Im Vergleich mit den mechanischen und hydraulischen Komponenten des Solargenerators dominieren die Kosten des Absorberrohres erheblich. Auch die Hydrozylinder müssen bei der schrittweisen Nachführung groß und stark ausgelegt werden, um zumindest jeden Nachführschritt präzise und rasch genug ausführen zu können, und sind deshalb auch relativ teuer.

Stand der Technik: EP 2 455 685 A offenbart ein Solargenerator gemäß dem Oberbegriff des Anspruchs 1. EP 226 592 A, US 4 178 913 A, WO 2009/087257 A, DE 10 2008 050 250 A, DE 10 2006 040 962 A und WO 96/29745 A offenbaren weitere relevante Vorrichtungen.

Der Erfindung liegt die Aufgabe zugrunde, einen Solargenerator der eingangs genannten Art funktionssicher und dennoch kostengünstiger zu gestalten als bisher, und ein Regelsitzventil zu schaffen, das einerseits ein synchrones kontinuierliches Nachführen des Reflektors mit einem sehr kleinen, geregelten Volumenstrom ermöglicht, und andererseits, als eigenständigen Erfindungsgedanken, eine feinfühlige Regelung eines sehr kleinen Volumenstroms von z.B. weniger als 1,5 I/min für beliebige Hydroverbraucher beherrscht.

Die gestellte Aufgabe wird mit den Merkmalen des Patentanspruches 1 und den Merkmalen des Patentanspruches 7 gelöst.

Da in dem Solargenerator der Reflektor synchron mit dem Lauf der Sonne und entsprechend langsam nachgeführt wird, ist stets eine optimale Energieausbeute sichergestellt. Dabei fließt nur ein sehr kleiner Volumenstrom. Dessen Regelung erfolgt, wie in dieser Technologie üblich, anhand der der geografischen Position des Solargenerators zugeordneten, bekannten Sonnenstands- und -laufverhältnisse als Sollvorgabe, und z.B. überwacht mit Abgriff der Reflektor-Ist-Position. Hier kann beispielsweise eine handelsübliche SPS-Steuerung eingesetzt werden, um das Regelsitzventil elektromagnetisch, gegebenenfalls mit hydraulischer Vorsteuerung, zu betätigen, in der die Regelung softwareseitig programmiert ist. In der Nachführvorrichtung ist das Regelsitzventil mit der Steuerung kostengünstig, baut es wegen des kleinen Volumenstroms sehr klein, und ist es standfest. Das Druckmittel für die Nachführbewegung kann problemlos aus einem Druckspeicher entnommen werden, was leistungsintensive Einschaltzyklen der Druckquelle einspart, und die Einschaltfrequenz erniedrigt. Der wenigstens eine Hydrozylinder kann kleiner ausgelegt werden, und wird für andere Stellbewegungen des Reflektors (Rückführung in die Morgen-Position, Einstellung einer Stau-Position oder Wartungs-Position oder Sturm-Position), gegebenenfalls ohne das Regelsitzventil auf anderer Weise mit größeren Volumenströmen bewegt. Ein erheblicher Vorteil resultiert aus dem Regelsitzventil im Falle einer Solarrinne, weil das Absorberrohr als besonders teure Ausstattung vor allem im Außendurchmesser (und der Wandstärke) kleiner und somit erheblich kostengünstiger hergestellt werden kann, da es wegen der kontinuierlichen Nachführung des Reflektors stets im Brennpunkt platziert ist.

Das Sitzventil ist jedoch, nach einem eigenständigen Erfindungsaspekt, eine kostengünstige hydraulische Komponente auch für andere Einsatzfälle, bei denen ein kontinuierlicher und geregelter, sehr kleiner Volumenstrom gebraucht wird, wobei die z.B. elektrische Ansteuerung über einen Magneten technisch einfach und somit kostengünstig zu realisieren ist. Selbst eine mechanische und/oder hydraulische Betätigung des Regelsitzventils ist möglich, um die Dichtfläche entsprechend zu deformieren. Die Dichtfläche und die Sitzfläche sind eben, wobei die Sitzfläche eine vorbestimmte Rauhigkeit mit zumindest teilweise den Durchgang kreuzenden, feinen Riefen aufweist. Die Dichtfläche, die in nicht verformtem Zustand eine vorbestimmte Ebenheit aufweist, z.B. drehbearbeitet ist, ist unter der Anpressung in die Riefen verformbar, um die Leckage im Sitzbereich zu kontrollieren und zu regeln. Die Tatsache, dass der kleine Volumenstrom nur durch mechanische Verformung der Dichtfläche an der Sitzfläche ohne eigentliche Hubbewegung und vor allem ohne Abhebehub geregelt wird, minimiert mechanischen Verschleiß und gewährleistet hohe Standzeit des Regelsitzventils. Das Regelsitzventil wird mittels eines Proportionalmagneten betätigt, der, da er zumindest im Wesentlichen überhaupt keine Hubbewegung vorzunehmen hat, in seinem Betriebsverhalten sehr präzise nur auf die Aufgabe einer variierenden Verformung der Dichtfläche abgestimmt werden kann, und dabei nur geringen Leistungsbedarf hat.

Die mechanische Verformung der Dichtfläche an der Sitzfläche ist nicht mit der Verformung einer elastischen Dichtung aus Elastomer oder Gummi vergleichbar, die in manchen Sitzventilen für niedrigere Betriebsdrücke verwendet wird. Denn eine solche elastische Dichtung sperrt bei entsprechender Anpressung vollständig ab, öffnet aber bei Entlastung oder einem Abhebehub schlagartig, so dass keine feinfühlige Regelung möglich ist.

Ein solches, einen Proportionalmagneten aufweisendes Sitzventil ist aus EP 1 914 458 A1 bekannt, die ein Hydraulik-Regelsitzventil gemäß dem Oberbegriff des Anspruchs 7 offenbart. Ein scheibenförmiger Dichtkörper aus nachgiebigem oder elastomerem Material ist im unteren Ende eines Ankers des Proportionalmagneten positioniert. Eine ebene Dichtfläche an dem Dichtkörper wird von einer am Anker angreifenden Ringscheibenfeder, und gegebenenfalls einer hinter dem Anker platzierten Regelfeder, auf die kreisringförmige Ebene, den Durchgang umgebende Sitzfläche gepresst, um bei stromlosem Proportionalmagneten die Absperrstellung einzustellen. Die Fläche der Sitzfläche beträgt nur einen Bruchteil der Fläche der Dichtfläche. Der bestromte Proportionalmagnet hebt die Dichtfläche gegen die Federkraft von der Sitzfläche ab, um eine von der Stromstärke abhängige Regelstellung einzustellen, in der kein Kontakt zwischen der Sitzfläche und der Dichtfläche mehr vorliegt, und eine geregelte Durchströmung stattfindet. In der Absperrstellung mit an die Sitzfläche von der Federkraft angepresster Dichtfläche wird jegliche Durchströmung unterbunden.

Bei einer zweckmäßigen Ausführungsform des Solargenerators ist die Dichtfläche in dem Regelsitzventil durch einen Proportionalmagneten beaufschlagt, der in einem eine Isolation enthaltenden Ankerrohr den Anker und einen Polkern aufweist. Der Anker beaufschlagt die Dichtfläche über einen den Polkern durchsetzenden, zweckmäßig nicht-magnetischen, Stößel, wobei ein Beaufschlagungsende des Ankers im Bereich der Isolation und dort positioniert ist, wo eine maximale Magnetflussdichte in den Polkern auftritt. Daraus resultiert mit nur moderatem oder geringem Leistungseinsatz eine hohe Magnetkraft, weil der Proportionalmagnet stets nahe bei seinem Leistungsmaximum arbeitet.

Zweckmäßig ist in dem Regelsitzventil die Sitzfläche aus Stahl hergestellt, während die Dichtfläche aus Kunststoff, einem Buntmetall, einer Metalllegierung, wie z.B. Messing, Leichtmetall oder einer Leichtmetalllegierung besteht, so dass die Sitzfläche an der Dichtfläche kalt verformbar ist. Als Kunststoff kann beispielsweise PTFE oder ein glasfaserverstärktes Polyamid eingesetzt werden, beispielsweise mit einer handelsüblichen Spezifikation PA 66 GF30.

In einer zweckmäßigen Ausführungsform ist der Polkern in einer Einschraubhülse enthalten, die einen die Dichtfläche tragenden Schließkörper aufnimmt, der beispielsweise kreiszylindrisch ist und die ebene Dichtfläche doch bearbeitet an einem Zylinderende aufweist. Die Einschraubhülse kann einen Anschlag zur Positionierung eines die Sitzfläche und einen Durchgang für das Druckmittel aufweisenden Sitzes, vorzugsweise aus Stahl, haben, der den Sitz in einer an eine Druckleitung und eine Arbeitsleitung angeschlossene Kanäle enthaltenden Aufnahmebohrung für die Einschraubhülse entsprechend positioniert.

Günstig ist es ferner, wenn zwischen der Druckquelle, vorzugsweise einer im Abschaltbetrieb betreibbaren Konstantpumpe und einem über eine Speicherladeschaltung füllbaren Druckspeicher, und einer über Richtungssteuerventile mit Arbeitsleitungen der Hydrozylinder verbundenen Druckleitung parallel zum Regelsitzventil ein 2/2-Wegesitzventil mit Schwarz/Weiß-Magnetbetätigung vorgesehen ist. Das Regelsitzventil regelt nur den kleinen Volumenstrom für die kontinuierliche Nachführung des Reflektors, während dann das 2/2-Wegesitzventil in der Absperrstellung ist. Sollen hingegen andere Stellbewegungen des Reflektors gesteuert werden, die eine höhere Stellgeschwindigkeit erfordern, wird das 2/2-Wegesitzventil entsprechend aufgesteuert, wobei das Regelsitzventil funktionslos bleibt.

Bei einer zweckmäßigen Ausführungsform sind die Richtungssteuerventile zwei 4/3-Wegeschieberventilen und zwei Hydrozylindern zugeordnet, die parallel geschaltet aber versetzt an einer den Reflektor drehenden Struktur angelenkt sind. Aufgabe der Wegeschieberventile ist es, die jeweiligen Bewegungsrichtungen der Hydrozylinder zu koordinieren, die wegen eines großen Verstellbereiches des Reflektors von beispielsweise mehr als 180° zueinander versetzt Totpunkt-Positionen überfahren müssen. So können die beiden Hydrozylinder gemeinsam ausfahren oder einfahren, oder kann einer ausfahren, während der andere einfährt und umgekehrt. Wegeschieberventile sind kostengünstig, haben wegen des Schieberprinzips allerdings eine geringfügige Leckage im Betrieb. Als etwas teuere Alternative bieten sich als Richtungssteuerventile deshalb für zwei Hydrozylinder vier 3/2-Wegesitzventile, jeweils mit Magnetbetätigung, an, die in der jeweiligen Absperrstellung leckagefrei dicht sind, so dass dann der gesamte geregelte Volumenstrom aus dem Regelsitzventil für die Nachführung nutzbar ist.

Bei einer zweckmäßigen Ausführungsform des Regelsitzventils besteht die Dichtfläche aus einem relativ zur Sitzfläche mechanisch verformbaren Material, wie beispielsweise Kunststoff. Als Kunststoff kann beispielsweise PTFE verwendet werden, oder ein Polyamid mit einer Glasfaservermengung, beispielsweise der Spezifikation PA 66 GF30. Jedoch sind als das Material auch Buntmetalle, Metalllegierungen, Leichtmetalle oder Leichtmetalllegierungen verwendbar, die unter mechanischer Anpressung wie Kunststoff an zumindest im Wesentlichen verformbaren Sitzflächen ein vorbestimmtes Verformungsverhalten haben. Dabei ist die Dichtfläche an einem zumindest überwiegend aus dem verformbaren Material bestehenden Schließkörper vorgesehen. Dieser kann eine kreiszylindrische Form mit zur Zylinderachse senkrechten, ebenen Endflächen aufweisen. Die axiale Länge des Schließkörpers sollte so gewählt sein, dass das Verformungsverhalten der Dichtfläche über den zur Verformung genutzten Kraftbereich weitestgehend linear bleibt.

In einer zweckmäßigen Ausführungsform hat die Sitzfläche einen kreisrunden Umriss, den Durchgang als Bohrung im Zentrum und eine vorbestimmte Fläche. Die Fläche der Dichtfläche sollte dabei mindestens der vorbestimmten Fläche der Sitzfläche entsprechen. Beispielsweise beträgt die vorbestimmte Fläche der Sitzfläche etwa 10,5 mm² und hat der Durchgang einen Durchmesser von 1,0 mm. Die Dichtfläche hat hingegen eine Fläche von etwa mindestens 11,3 mm².

Zweckmäßig ist die Dichtfläche aus glasfaserverstärktem Polyamid hergestellt und drehbearbeitet, während die Sitzfläche aus Stahl besteht, gehärtet sein sollte, und eine vorbestimmte Rauhigkeit, beispielsweise mit einer Rauhigkeitskennzahl zwischen etwa Rz 1 bis etwa Rz 5 aufweisen sollte. Diese Kennzahlen können beispielsweise für Riefen einer Tiefe zwischen etwa 1 µm und 5 µm stehen.

Die Sitzfläche sollte nach der Härtung geschliffen sein, vorzugsweise mit einer vorbestimmten Schleifwerkzeugskörnung, einer vorbestimmten Schleifdurchgangsanzahl und einer einzigen Schleifdurchgangsrichtung. Dazu kann vorgegeben sein, dass beim Schleifen zunächst ein nur kontaktierender Schleifdurchgang durchgeführt wird, und dass dann eine Zustellung des Schleifwerkzeuges um ein genau vorbestimmtes Maß vorgenommen wird, um einen weiteren Schleifdurchgang in der vorbeschriebenen Schleifdurchgangsrichtung auszuführen und weitestgehend gerade Riefen zu bilden.

Zweckmäßig sind die Sitzfläche in ihrer Flächengröße und Rauhigkeit, die Dichtfläche in ihrem Verformungsverhalten, und die Anpressung in ihrem Variationsbereich so aufeinander abgestimmt, dass der Volumenstrom aus der kontrollierten Leckage innerhalb eines Eingangsdruckbereiches zwischen etwa 100 bis 300 bar zwischen 0,01 und 0,15 l/min, regelbar ist, vorzugsweise sogar nur zwischen 0,05 bis 0,1 l/min. Im Falle eines Proportionalmagneten zur Steuerung der Verformung der Dichtfläche kann dieser so ausgelegt sein, dass er bei maximaler Strombeaufschlagung (Ditherfrequenz, beispielsweise 40 Hz) eine Leistungsaufnahme von nur 21 Watt hat.

Schließlich ist es wichtig, den Proportionalmagneten für die Verformung der Dichtfläche so auszulegen, dass er stets bei einem optimalen Betriebspunkt nahe der maximalen Kraft arbeitet. Zu diesem Zweck wird der Anker zumindest im Wesentlichen ohne jegliche Hubbewegung beaufschlagt und mit seinem Betätigungsende im Ankerrohr so positioniert, dass das Betätigungsende ganz nahe (0,5 bis 0,7 mm) beim Polkern positioniert ist, wo eine maximale Magnetflussdichte vorliegt.

Anhand der Zeichnungen werden Ausführungsformen des Erfindungsgegenstandes erläutert. Es zeigen:
- Fig. 1: eine schematische Ansicht eines Solargenerators,
- Fig. 2: ein Blockschaltbild einer ersten Ausführungsform einer elektrohydraulischen Sonnenstands-Nachführvorrichtung des Reflektors des Solargenerators,
- Fig. 3: ein Blockschaltbild einer weiteren Ausführungsform einer Sonnenstands-Nachführvorrichtung,
- Fig. 4: einen Axialschnitt eines Regelsitzventils für eine Sonnenstands-Nachführvorrichtung und für andere Einsatzfälle,
- Fig. 5: eine vergrößerte Schemadarstellung eines Details des Regelsitzventils,
- Fig. 6: ein Diagramm zur Magnetkraft über dem Magnetstrom, und
- Fig. 7: ein Diagramm des geregelten Volumenstroms über dem Magnetstrom.

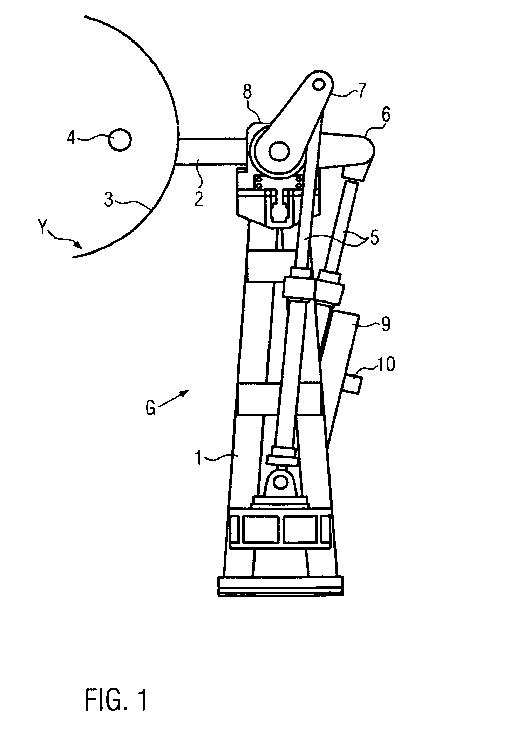

Fig. 1 zeigt als nicht beschränkendes Beispiel einen Solargenerator G mit einem dem Sonnenstand bzw. dem Lauf der Sonne kontinuierlich nachführbaren Reflektor Y. In Fig. 1 ist der Reflektor Y eine sogenannte Solarrinne 3, in deren Brennpunktbereich ein Absorberrohr 4 platziert ist. Alternativ könnte der Reflektor Y auch ein Solarpanel oder ein Spiegel, oder dgl. sein (nicht gezeigt).

Der Solargenerator G weist einen Pylonen 1 auf, an dem ein den Reflektor Y tragender Arm 2 um eine Achse 8 drehbar ist, beispielsweise über mindestens 180°. Im Pylonen 1 sind zwei parallel geschaltete Hydrozylinder 5 abgestützt, die über Arme 6 und 7 mit dem Arm 2 gekoppelt sind. Ferner ist ein Powerpack 9, beispielsweise an einem Hydrozylinder 5, vorgesehen, das typischerweise ein elektrohydraulisches Motorpumpenaggregat mit einer im Abschaltbetrieb betreibbaren Konstantpumpe, ein Druckmittelreservoir und dgl. enthält und aus dem die Hydrozylinder 5 gespeist werden, wobei eine Steuerung 10 vorgesehen sein kann, z.B. eine programmierbare SPS-Steuerung.

In Fig. 1 ist der Reflektor Y beispielsweise in einer Morgen-Position gezeigt, aus der er synchron mit dem Lauf der Sonne während eines Tages im Uhrzeigersinn bis in eine Abend-Position durch Beaufschlagen der Hydrozylinder 5 nachgeführt wird. Die kontinuierliche Nachführung erfolgt durch Einspeisen eines sehr kleinen, geregelten Volumenstromes von beispielsweise 0,01 bis 0,15 l/min bei einem Betriebsdruck zwischen etwa 100 bis 300 bar. Der jeweilige Sonnenstand bzw. der Lauf der Sonne ist für die geographische Aufstellposition des Solargenerators G bekannt und wird bei der Regelung des Volumenstroms berücksichtigt. Dabei kann beispielsweise der relative Ist-Drehwinkel des Armes 2 um die Achse 8 abgegriffen werden, um die Position des Reflektors Y stets exakt in der Sonnenposition zu halten.

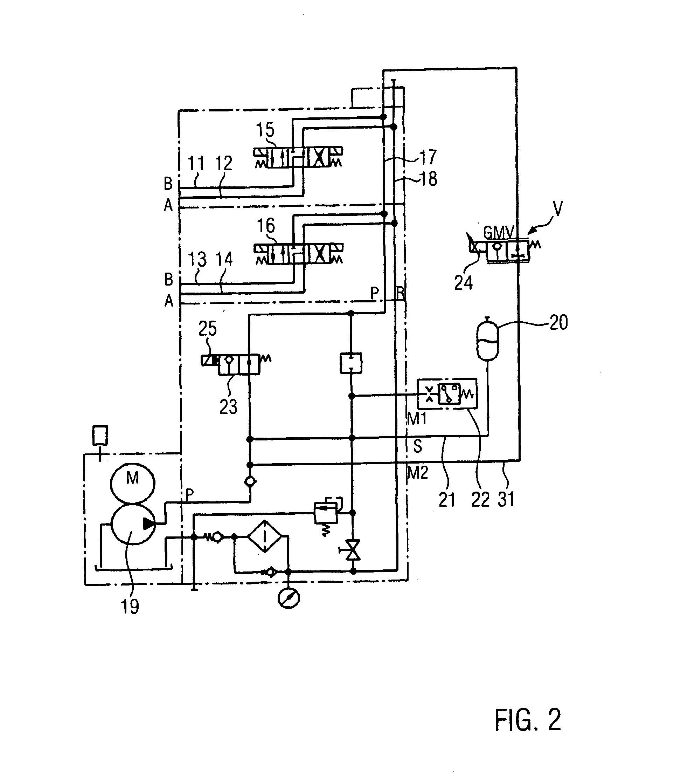

Fig. 2 zeigt als Blockschaltbild Hauptkomponenten der Sonnenstands-Nachführvorrichtung, beispielsweise des Solargenerators G von Fig. 1. In dieser Ausführungsform sind Arbeitsleitungen 11, 12, 13, 14 für die beiden, doppelseitig beaufschlagbaren Hydrozylinder 5 dargestellt, die über in dieser Ausführungsform zwei 4/3-Wegeschieberventile 15, 16 mit Magnetbetätigung an eine Druckleitung 17 und eine Rücklaufleitung 18 angeschlossen sind. Eine Druckquelle 19 ist beispielsweise eine durch einen Elektromotor angetriebene Konstantpumpe, die im Abschaltbetrieb betreibbar ist, und ein Druckspeicher 20, der über eine Leitung 21 an die Druckleitung 17 angeschlossen ist. An die Druckleitung 17 ist auch ein elektrischer Druckschalter 22 angeschlossen, der mit der Steuerung verbunden ist und beispielsweise für einen Speicherladebetrieb eingesetzt wird. Ferner zweigt von der Druckleitung 17 eine Leitung 31 ab, in der erfindungsgemäß ein Regelsitzventil V enthalten ist, das hier z.B. durch einen Proportionalmagneten 24 betätigt wird, wobei die Leitung 31 zu einem Ende der Druckleitung 17 führt, während von der Druckquelle 19 ausgehend in der Druckleitung 17 ein 2/2-Wegesitzventil 23 mit einer Schwarz/Weiß-Magnetbetätigung 25, und gegebenenfalls einer hydraulischen Druckvorsteuerung, angeordnet ist. Aufgabe der Wegeschieberventile 15, 16 ist es, die Bewegungsrichtungen der Hydrozylinder 5 entsprechend zu koordinieren, die bei der Bewegung des Reflektors Y während eines Tages zueinander versetzt Totpunktbereiche durchfahren, und entsprechend ausfahren oder einfahren müssen. Aufgabe des Regelsitzventils V ist es hingegen, die Nachführung des Reflektors Y permanent und synchron mit dem Lauf der Sonne durch Einspeisen und Regeln eines sehr kleinen Volumenstroms in die Hydrozylinder 5 auszuführen. Aufgabe des 2/2-Wegesitzventils 23 ist es, andere Stellbewegungen des Reflektors zu steuern. Während der kontinuierlichen Nachführung ist der Magnet 25 bestromt, so dass das 2/2-Wegesitzventil in der Absperrstellung ist und, vorzugsweise, in beiden Strömungsrichtungen, leckagefrei dicht ist.

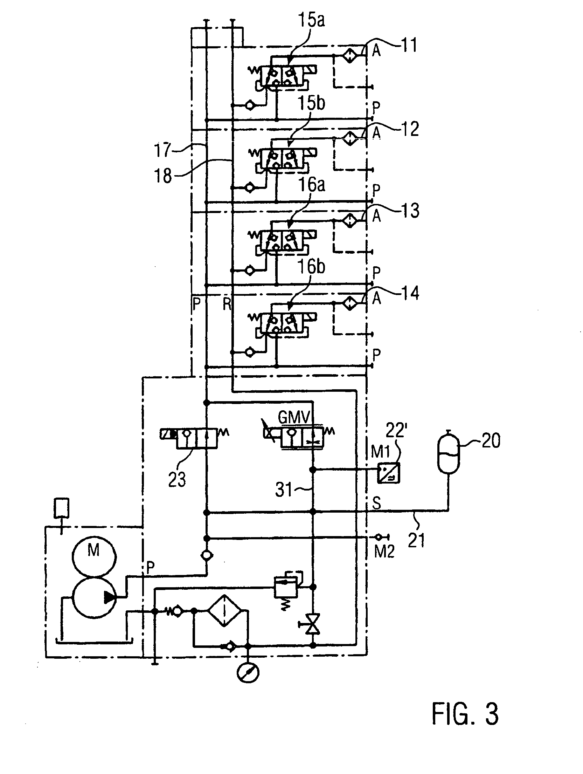

In der Ausführungsform der Sonnenstands-Nachführvorrichtung in Fig. 3 für z.B. den Solargenerator G von Fig. 1 sind die Richtungssteuerventile, die zwischen Druckleitung 17, Rücklaufleitung 18 und den Arbeitsleitungen 11, 12, 13, 14 der Hydrozylinder 5 angeordnet sind, im Unterschied zu Fig. 2 3/2-Wegesitzventile 15a, 15b, 16a, 16b, die in der jeweiligen Absperrstellung leckagefrei dicht sind. Der weitere Aufbau entspricht dem anhand Fig. 2 erläuterten, ausgenommen der Tatsache, dass anstelle des Druckschalters 22 von Fig. 2 ein Drucksensor 22', beispielsweise für die Speicherladeschaltung, vorgesehen ist.

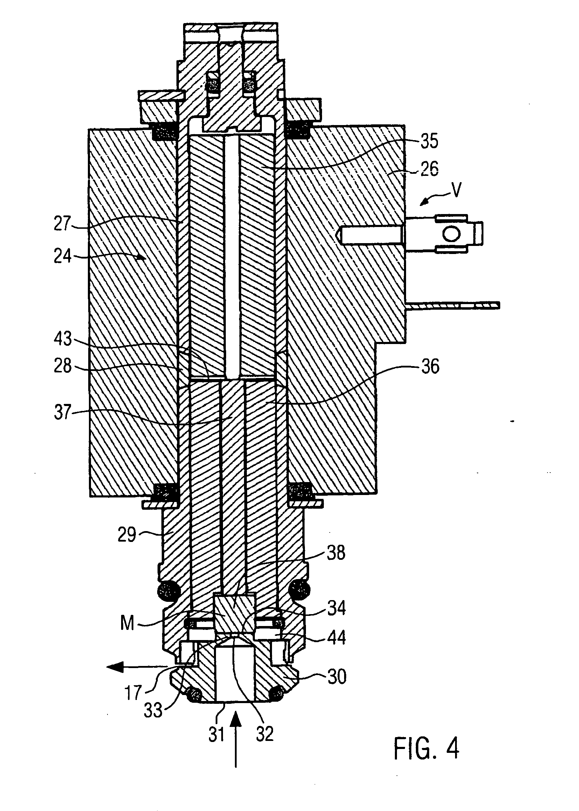

Fig. 4 verdeutlicht das in den Fig. 2 und 3 gezeigte Regelsitzventil V, das kompakt ist und beispielsweise einschließlich des Proportionalmagneten 24 einen Durchmesser von etwa 40 mm bei einer Länge von etwa 90 mm haben kann.

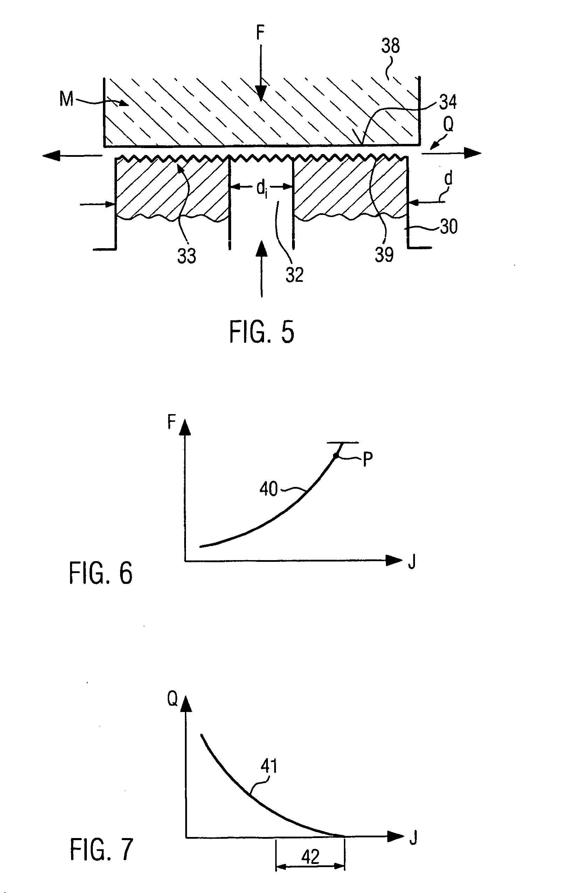

Der Proportionalmagnet 24 weist ein Metallgehäuse 26 (Spule) auf, in welchem in einer Mittelbohrung ein Ankerrohr 27 angeordnet ist, das einen hier z.B. längs durchbohrten Anker 35 aufnimmt. Das Ankerrohr wird durch eine umfängliche Isolierung 28 unterteilt und setzt sich nach unten in einer Einschraubhülse 29 fort, die über das untere Ende des Gehäuses 26 übersteht, und in eine nur angedeutete Aufnahmebohrung 44 einschraubbar ist, in der nicht hervorgehobene Kanäle mit der Leitung 31 bzw. der Druckleitung 17 verbunden sind. Die Einschraubhülse 29 weist am unteren Ende einen Anschlag zum Positionieren eines aus Stahl bestehenden Sitzes 30 in der Einschraubbohrung 44 auf. Der Sitz 30 besitzt an einem oberseitigen Fortsatz eine ebene, gehärtete und geschliffene Sitzfläche 33, in deren Zentrum ein Durchgang 32 als Bohrung geformt ist. Die Sitzfläche 33 besitzt eine vorbestimmte Rauhigkeit, beispielsweise mit einer Rauhigkeitskennziffer Rz 1 bis Rz 5, die dadurch erzeugt sein kann, dass ein Schleifwerkzeug mit einer vorbestimmten Körnung über eine vorbestimmte Durchgangsanzahl in einer einzigen vorbestimmten Durchgangsrichtung über die Sitzfläche 33 geführt wird, beispielsweise um die in Fig. 5 vergrößert dargestellten weitestgehend geradlinigen Riefen 39 zu erzeugen, die den Durchgang 32 zumindest bereichsweise kreuzen.

In der Einschraubhülse 29 ist ein Polkern 36 stationär angeordnet, dessen oberes Ende im Bereich der Isolierung 28 liegt. Ein Betätigungsende 43 des Ankers 35 ist so positioniert, dass es im Bereich der Isolierung und ganz nahe (z.B. 0,5 bis 0,7 mm) beim oberen Ende des Polkerns 36 liegt, d.h. im Bereich der stärksten Magnetflussdichte in den Polkern 36 und das Gehäuse 26. Im Polkern 36 ist ein aus nicht magnetischem Material bestehender Stößel 37 angeordnet, dessen unteres Ende einen hier kreiszylindrischen Schließkörper 38 aus einem unter der Anpressung durch den Anker 35 verformbaren Material M beaufschlagt. Der Schließkörper 38 sitzt in dem unteren Ende des Polkerns 36 und liegt unter permanenter Anpressung mit einer Dichtfläche 34 auf der Sitzfläche 33 auf. Die Dichtfläche 34 ist wie die Sitzfläche 33 eben und kreisrund und kann drehbearbeitet sein. Der Schließkörper 38 besteht beispielsweise aus Kunststoff, wie PTFE oder einem Polyamid mit Glasfaserverstärkung, und kann bei einem Außendurchmesser von etwa 3,8 mm eine Länge von ca. 4,0 mm haben. Der Durchgang 32 ist beispielsweise eine Bohrung mit einem Innendurchmesser von 1,0 mm, während der kreisrunde Außenumriss der Sitzfläche 33 einen Durchmesser von 3,8 mm haben kann, so dass die vorbestimmte Fläche der Sitzfläche 33 etwa 10,5 mm² beträgt. Bei maximaler Bestromung erzeugt der Permanentmagnet, beispielsweise mit einer Leistungsaufnahme von etwa 21 Watt, eine Magnetkraft zwischen etwa 90 bis 100 N, wobei er im Wesentlichen keine Hubbewegung ausführt, sondern nur die Anpresskraft der verformten Dichtfläche 34 an der Sitzfläche 33 variiert, um einen kleinen Volumenstrom zu regeln, der aus einer kontrollierten Leckage im Sitzbereich generiert wird, um die kontinuierliche Bewegungsgeschwindigkeit der Hydrozylinder 5 entsprechend dem Lauf der Sonne zu regeln. Der Eingangsdruck im Durchgang 32 liegt beispielsweise zwischen etwa 100 bis 300 bar, d.h. der Volumenstrom wird innerhalb einer Druckdifferenz von etwa 200 bar geregelt.

Fig. 5 verdeutlicht, dass die Fläche der Dichtfläche 34 geringfügig größer sein kann als die vorbestimmte Fläche (d, di) der Sitzfläche 33 am Sitz 30, wobei die Riefen 39 übertrieben groß dargestellt sind, weil sie tatsächlich nur eine Rautiefe von beispielsweise 1 bis 5 µm haben. Der Schließkörper 38 wird mit der Magnetkraft F in Richtung des Pfeiles beaufschlagt, während der Sitz 30 stationär verbaut ist. Unter der Magnetkraft F verformt sich die Dichtfläche 34 in die Riefen 39, um die Leckage vom Durchgang 32 nach außen kontinuierlich zu regeln und so den Volumenstrom Q zu generieren.

Fig. 6 verdeutlicht die Magnetkraft F über dem Beaufschlagungsstrom I des Permanentmagneten 24 mit einer Kurve 40, die an einem optimalen Betriebspunkt P nahe beim Maximum der Magnetkraft F gezeigt ist. Der Permanentmagnet 24 ist so ausgelegt, dass er im Betrieb des Regelsitzventils V beim Punkt P arbeitet.

Fig. 7 verdeutlicht den Volumenstrom Q über dem Beaufschlagungsstrom I mit einer hyperbelähnlichen Kurve 41, wobei ein Betriebsbereich 42, beispielsweise zum Regeln des Volumenstroms Q eingesetzt wird, in welchem ein nahezu linearer Verlauf des Volumenstroms Q vorliegt.

Das Regelsitzventil V ist nicht nur für die gezeigten Ausführungsformen der Sonnenstands-Nachführvorrichtungen von Solargeneratoren G verwendbar, sondern auch für andere Einsatzfälle, bei denen es auf die kontinuierliche Regelung eines sehr kleinen Volumenstroms ankommt.

Es ist zwar denkbar, dass bei maximaler Magnetkraft F zwischen der Dichtfläche 34 und der Sitzfläche 33 eine vollständige Absperrung erfolgt. Jedoch wird das Regelsitzventil V im Betrieb so betätigt, dass nur ein ausgewählter Regelbereich benutzt wird, um den Volumenstrom Q feinfühlig zu regeln.

## Patentansprüche

1. Solargenerator (G), mit einem Reflektor (Y), insbesondere einer Solarrinne (3) mit Absorberrohr (4), und einer elektrohydraulischen, wenigstens einen Hydrozylinder (5) aufweisenden Sonnenstands-Nachführvorrichtung für den Reflektor, wobei zwischen wenigstens einer Arbeitsleitung (11, 12, 13, 14) des Hydrozylinders und einer Druckquelle (19, 20) ein Regelsitzventil (V) vorgesehen ist, **dadurch gekennzeichnet, dass** der Reflektor (Y) über das Regelsitzventil (V) synchron zum Lauf der Sonne kontinuierlich und unterbrechungsfrei nachführbar ist, und dass das Regelsitzventil (V) in einem Sitzbereich eine Sitzfläche (33) und eine Dichtfläche (34) aufweist, die in einer Regelstellung permanent mit variable Anpressung ohne Abhebehub aneinanderliegen, und zwischen denen ein Druckmittelstrom als kontrollierte Leckage generierbar ist, um dem wenigstens einen Hydrozylinder einen geregelten Druckmittelstrom zuzuführen, und dass zumindest die Dichtfläche (34) aus einem unter der Anpressung deformierbaren Material besteht.

2. Solargenerator nach Anspruch 1, **dadurch gekennzeichnet, dass** die Dichtfläche (34) zumindest im Wesentlichen ohne eine Hubbewegung durch einen Proportionalmagneten (24) anpressbar ist, der einen in einem eine Isolation (28) enthaltenden Ankerrohr (27) untergebrachten Anker (35) und einen Polkern (36) aufweist und die Dichtfläche in Schließrichtung über einen den Polkern durchsetzenden, nicht magnetischen Stößel (37) beaufschlagt, und dass ein Beaufschlagungsende (43) des Ankers im Bereich der Isolation und einer maximalen Magnetflussdichte in den Polkern positioniert ist.

3. Solargenerator nach Anspruch 1, **dadurch gekennzeichnet, dass** die Sitzfläche (33) aus Stahl und die Dichtfläche (34) aus Kunststoff, Buntmetall, einer Metalllegierung, Leichtmetall oder einer Leichtmetalllegierung bestehen.

4. Solargenerator nach Anspruch 2, **dadurch gekennzeichnet, dass** der Polkern (36) in einer Einschraubhülse (29) sitzt, die die Dichtfläche (34) an einem Schließkörper (38) aufweist, und mit einem Anschlag zur Positionierung eines die Sitzfläche (33) und einen Durchgang (32) aufweisenden Sitzes (30), vorzugsweise aus Stahl, in einer an eine Druckleitung (31, 17) und eine Arbeitsleitung (11, 12, 13, 14) angeschlossene Kanäle enthaltenden Aufnahmebohrung (44) versehen ist.

5. Solargenerator nach wenigstens einem der vorhergehenden Ansprüche, **dadurch gekennzeichnet, dass** zwischen der Druckquelle (19, 20), vorzugsweise einer im Abschaltbetrieb betreibbaren Konstantpumpe (19), und einem Druckspeicher (20), und einer über Richtungssteuerventile (15, 16, 15a, 15b, 16a, 16b) mit den Arbeitsleitungen (11, 12, 13, 14) verbundenen Druckleitung (17) parallel zum Regelsitzventil (V) ein 2/2-Wegesitzventil (23) mit Schwarz/Weiß-Magnetbetätigung (25) vorgesehen ist.

6. Solargenerator nach Anspruch 5, **dadurch gekennzeichnet, dass** die Richtungssteuerventile zwei 4/3-Wegeschieberventile (15, 16) oder vier 3/2-Wegesitzventile (15a, 15b, 16a, 16b), jeweils mit Magnetbetätigung, sind.

7. Hydraulik-Regelsitzventil (V) zur kontinuierlichen Geschwindigkeitssteuerung wenigstens eines Hydrozylinders (5), insbesondere einer elektrohydraulischen Sonnenstands-Nachführvorrichtung eines Solargenerators (G), mit einer ebenen Sitzfläche (33) im Hydraulik-Regelsitzventil (V) aus zumindest im Wesentlichen nicht verformbaren Material zur Zusammenwirkung mit einer gegen die Sitzfläche anpressbaren ebenen Dichtfläche (34) aus gegenüber der Sitzfläche verformbarem Material, wobei in einem Dichtbereich des Hydraulik-Regelsitzventils (V) die Dichtfläche oder die Sitzfläche einen Durchgang umgibt, **dadurch gekennzeichnet, dass** die Dichtfläche (34) und die Sitzfläche (33) in einer Regelstellung des Hydraulik-Regelsitzventils (V) permanent gegeneinander gepresst sind, und eine kontrollierte geregelte Leckage durch den Dichtbereich ausschließlich durch eine über die variable Anpressung der Dichtfläche (34) zumindest im Wesentlichen ohne Abhebehubbewegung einstellbare Materialverformung der Dichtfläche (34) generierbar ist, dass die Sitzfläche (33) eine vorbestimmte Rauhigkeit mit zumindest teilweise den Durchgang (32) kreuzenden Riefen (39) aufweist, und dass die in nicht verformtem Zustand eine vorbestimmte Ebenheit aufweisende Dichtfläche (34) unter der Anpressung in die Riefen (39) verformbar ist.

8. Regelsitzventil nach Anspruch 7, **dadurch gekennzeichnet, dass** die Dichtfläche (34) an einem zumindest überwiegend aus einem relativ zur Sitzfläche (33) verformbaren Material (M), vorzugsweise aus Kunststoff, Buntmetall, einer Metalllegierung, einem Leichtmetall, einer Leichtmetalllegierung, bestehenden Schließkörper (38), vorzugsweise einem massiven Kreiszylinder, vorgesehen ist.

9. Regelsitzventil nach Anspruch 7, **dadurch gekennzeichnet, dass** die Sitzfläche (33) einen kreisrunden Umriss, den Durchgang (32) als Bohrung im Zentrum, und eine vorbestimmte Fläche aufweist, und dass die Fläche der Dichtfläche (34) mindestens der vorbestimmten Fläche der Sitzfläche (33) entspricht.

10. Regelsitzventil nach Anspruch 7, **dadurch gekennzeichnet, dass** die Dichtfläche (34) aus einem Kunststoff, wie z.B. PTFE oder glasfaserverstärktem Polyamid, besteht, und dass die Sitzfläche (33) aus Stahl besteht und eine Rauhigkeit mit einer Rauhigkeitskennzahl zwischen etwa Rz 1 bis Rz 5 aufweist.

11. Regelsitzventil nach Anspruch 10, **dadurch gekennzeichnet, dass** die Dichtfläche (34) drehbearbeitet und die Sitzfläche (33) gehärtet und geschliffen ist, vorzugsweise mit einer vorbestimmten Schleifwerkzeugkörnung, in einer vorbestimmten Schleifdurchgangsanzahl und einer einzigen Schleifdurchgangsrichtung.

12. Regelsitzventil nach wenigstens einem der Ansprüche 7 bis 11, **dadurch gekennzeichnet, dass** die Sitzfläche (33) in ihrer Flächengröße und Rauhigkeit, die Dichtfläche (34) in ihrem Deformationsverhalten, und die Anpressung in einem vorbestimmten Variationsbereich so aufeinander abgestimmt sind, dass der Volumenstrom in einem Eingangs-Druckbereich zwischen etwa 100 bis etwa 300 bar zwischen 0,001 bis 0,15 l/min, vorzugsweise zwischen 0,05 bis 0,1 l/min, regelbar ist.

13. Regelsitzventil nach wenigstens einem der Ansprüche 7 bis 12, **dadurch gekennzeichnet, dass** die Dichtfläche (34) durch einen Proportionalmagneten (24) anpressbar ist, dessen Anker (35) zumindest im Wesentlichen ohne Hubbewegung in Schließrichtung der Dichtfläche (34) antreibbar und mit einem Beaufschlagungsende (43) relativ zu einem Polkern (36) im Bereich einer maximalen Magnetflussdichte positioniert ist.

## Claims

1. Solar generator (G) comprising a reflector (Y), in particular a solar trough (3) having an absorber tube (4), and an electro-hydraulic sun-position tracking device for the reflector, a hydrocylinder (5) and a regulating seat valve (V) between at least one working line (11, 12, 13, 14) of the hydrocylinder and a pressure source (19, 20) **characterized in that** the reflector (Y) can be guided via the regulating seat valve (V) to follow in synchronism with the course of the sun continuously and uninterruptedly, and that the regulating seat valve (V) in a seat portion has a seat surface (33) and a sealing surface (34) with the seat surface (33) and sealing surface (34) permanently abutting each other in a regulating position with variable contact pressure but without a lifting stroke, such that between the seat surface (33) and the sealing surface (34) a pressure medium flow can be generated as controlled leakage in order to supply the controlled pressure medium flow to the at least one hydrocyclinder, and that at least the sealing surface (34) consists of a material which is deformable under the contact pressure.

2. Solar generator according to claim 1, **characterized in that** the sealing surface (34) can be pressed against the seat surface (33) substantially without a stroke movement by a proportional magnet (24) comprising an armature (35) and a pole core (36) in an armature tube (27) containing an insulation (28), the proportional magnet (24) actuating the sealing surface (34) in closing direction via a non-magnetic plunger (37) penetrating the pole core, and that an actuating end (43) of the armature (35) is positioned in the region of the insulation and of a maximum magnetic flux density into the pole core.

3. Solar generator according to claim 1, **characterized in that** the seat surface (33) consists of steel and that the sealing surface (34) consists of plastic material, non-ferrous metal, metal alloy, light metal or light metal alloy.

4. Solar generator according to claim 2, **characterized in that** the pole core (36) is seated in a screw-in sleeve (29) comprising the seat surface (34) at a closing body (38), which screw-in sleeve (29) is equipped with a stop for positioning a seat (30), preferably made from steel, comprising the seat surface (33) and a passage (32), the screw-in sleeve (29) having an accommodating bore (44) containing channels which are connected with a pressure line (31, 17) and a working line (11, 12, 13, 14).

5. Solar generator according to at least one of the preceding claims, **characterized in that** a 2/2-multiway-seat valve (23) having a black/white-magnet actuation (25) is provided parallel to the regulating seat valve (V) between the pressure source (19, 20), preferably a constant discharge pump (19) operated in a switch-off-operation, a pressure accumulator (20) and a pressure line (17) connected via directional control valves (15, 16, 15a, 15b, 16a, 16b) with the working lines (11, 12, 13, 14).

6. Solar generator according to claim 5, **characterized in that** the directional control valves comprise two 4/3-multiway-slider valves (15, 16) or four 3/2-multiway-seat valves (15a, 15b, 16a, 16b), respectively having a magnet actuation.

7. Hydraulic regulating seat valve (V) for the continuous speed control of at least one hydrocylinder (5), in particular of an electro-hydraulic sun-position tracking device of a solar generator (G), the hydraulic regulating seat valve (V) having a planar seat surface (33) of at least substantially non-deformable material for a co-action with a planar sealing surface (34) being made of deformable material compared to the seat surface and being pressed against the seat surface, wherein in a sealing portion of the hydraulic regulating seat valve (V) the seat surface or the sealing surface surrounds a passage, **characterized in that** in a regulating position of the hydraulic regulating seat valve (V) the sealing surface (34) and the seat surface (33) are pressed against each other permanently, that a controlled and regulated leakage through the sealing portion exclusively can be generated through the sealing portion by an adjustable material deformation of the sealing surface (34) which material deformation is adjusted via the variable contact pressure of the sealing surface (34) at least substantially without a lifting stroke, that the seat surface (33) has a predetermined roughness including grooves (39) at least partially crossing the passage (32), and that the sealing surface (34) which has a predetermined evenness in non-deformed condition, is deformable into the grooves (39) by the contact pressure.

8. Hydraulic regulating seat valve according to claim 7, **characterized in that** the sealing surface (34) is provided at a closing body (38), preferably a solid circular cylinder, which consists at least predominantly of a material (M) which is deformable relative to the seat surface (33), preferably consists of plastic material, non-ferrous metal, metal alloy, light metal or light metal alloy.

9. Hydraulic regulating seat valve according to claim 7, **characterized in that** the seat surface (33) has a circular contour, the passage (32) as a bore in the centre, and a predetermined area, and that the area of the sealing surface (34) at least corresponds with the predetermined area of the seat surface (33).

10. Hydraulic regulating seat valve according to claim 7, **characterized in that** the sealing surface (34) consists of a plastic material like eg. PTFE or glass-fiber reinforced polyamide, and that the seat surface (33) consists of steel and has a roughness with a roughness specification between about Rz1 to Rz5.

11. Hydraulic regulating seat valve according to claim 10, **characterized in that** the sealing surface (34) is machined by turning and that the seat surface (34) is hardened and ground, preferably by using a predetermined grinding tool grain, a predetermined number of grinding cycles and in a single grinding cycle direction.

12. Hydraulic regulating seat value according to at least one of claims 7 to 11, **characterized in that** the seat surface (33) in the dimension of its area and its roughness, the sealing surface (34) in its deformation property, and the contact pressure are matched with each other in a predetermined variation range such that the pressure medium flow can be regulated within an inlet pressure range between about 100 to about 300 bar between 0,001 to 0,15 l/min, preferable between 0.05 to 0,1 l/min.

13. Hydraulic regulating seat valve according to at least one of claims 7 to 12, **characterized in that** the sealing surface (34) is pressed against the seat surface (33) by a proportional magnet (24), the armature (35) of which proportional magnet (24) is driven at least substantially without a stroke movement in closing direction of the sealing surface (34), the armature (35) being positioned with an actuating end (43) relative to a pole core (36) in the region of a maximum magnetic flux density.

## Revendications

1. Générateur solaire (G) comportant un réflecteur (Y), en particulier un collecteur solaire cylindroparabolique (3) avec un tube d'absorption (4), et un dispositif électrohydraulique de poursuite de la position du soleil pour le réflecteur, comportant au moins un vérin hydraulique (5), dans lequel une vanne à siège de régulation (V) est pourvue entre au moins une conduite de service (11, 12, 13, 14) du vérin hydraulique et une source de pression (19, 20), **caractérisé en ce que** le réflecteur (Y) peut effectuer le suivi via la vanne à siège de régulation (V) de manière synchrone avec la course du soleil, en continu et sans interruption, et **en ce que** la vanne à siège de régulation (V) comporte dans une zone de siège une surface de siège (33) et une surface d'étanchéité (34) qui sont en permanence adjacentes sans force de levage avec une pression de contact variable dans une position de régulation, et entre lesquelles un débit de fluide pressurisé peut être généré comme fuite contrôlée pour fournir audit au moins un vérin hydraulique un débit de fluide pressurisé régulé, et **en ce qu'**au moins la surface d'étanchéité (34) est constituée d'un matériau déformable sous la pression de contact.

2. Générateur solaire selon la revendication 1, **caractérisé en ce que** la surface d'étanchéité (34) peut être comprimée au moins essentiellement sans déplacement de levage par un électro-aimant proportionnel (24) qui comporte un induit (35) agencé dans un tube d'induit (27) comprenant un isolant (28), ainsi qu'un noyau de pôle (36), et la surface d'étanchéité entre en contact avec un poussoir amagnétique (37) qui traverse le noyau de pôle en direction de fermeture, et **en ce qu'**une extrémité de contact (43) de l'induit est positionnée dans le noyau de pôle dans la zone de l'isolant et avec une induction magnétique maximale.

3. Générateur solaire selon la revendication 1, **caractérisé en ce que** les surfaces de siège (33) sont en acier et les surfaces d'étanchéité (34) en matière plastique, en métal non ferreux, en alliage métallique, en métal léger ou en alliage de métaux légers.

4. Générateur solaire selon la revendication 2, **caractérisé en ce que** le noyau de pôle (36) est logé dans une douille filetée (29) qui comporte la surface d'étanchéité (34) sur un corps de fermeture (38), et est pourvu d'une butée, préférablement en acier, pour le positionnement d'un siège (30) comportant la surface de siège (33) et un passage (32), dans un perçage de réception (44) comportant des canaux et connecté à une conduite pressurisée (31, 17) et à une conduite de service (11, 12, 13, 14).

5. Générateur solaire selon au moins l'une des revendications précédentes, **caractérisé en ce qu'**une vanne à siège à 2/2 voies (23) avec un actionnement à électroaimant noir/blanc (25) est pourvue en parallèle à la vanne à siège de régulation (V) entre d'une part la source de pression (19, 20), qui est préférablement une pompe à débit constant (19) actionnable en commande de coupure, et un accumulateur de pression (20), et d'autre part une conduite pressurisée (17) connectée aux conduites de service (11, 12, 13, 14) via des vannes de commande de direction (15, 16, 15a, 15b, 16a, 16b).

6. Générateur solaire selon la revendication 5, **caractérisé en ce que** les vannes de commande de direction sont deux vannes à guillotine 4/3 voies (15, 16) ou quatre vannes à siège 3/2 voies (15a, 15b, 16a, 16b), chacune avec un actionnement à électroaimant.

7. Vanne à siège de régulation hydraulique (V) pour une commande de vitesse en continu d'au moins un vérin hydraulique (5), en particulier d'un dispositif électrohydraulique de poursuite de la position du soleil d'un générateur solaire (G), avec une surface de siège plane (33) dans la vanne à siège de régulation hydraulique (V) en un matériau au moins principalement constitué d'un matériau non déformable destiné à interagir avec une surface d'étanchéité plane (34) qui peut être compressée contre la surface de siège et constituée en un matériau qui se déforme contre la surface de siège, dans laquelle la surface d'étanchéité ou la surface de siège entoure un passage dans une zone d'étanchéité de la vanne à siège de régulation hydraulique (V), **caractérisée en ce que** la surface d'étanchéité (34) et la surface de siège (33) sont en permanence comprimées l'une contre l'autre dans une position de régulation de la vanne à siège de régulation hydraulique (V), et une fuite à régulation contrôlée peut être générée par la zone d'étanchéité uniquement par une déformation du matériau de la surface d'étanchéité (34) réglable via la pression de contact variable de la surface d'étanchéité (34) au moins essentiellement sans déplacement de force de levage, **en ce que** la surface de siège (33) présente une rugosité prédéterminée avec des stries (39) qui traversent au moins partiellement le passage (32), et **en ce que** la surface d'étanchéité (34) qui présente une planéité prédéterminée à l'état non déformé est déformable sous la pression de contact dans les stries (39).

8. Vanne à siège de régulation selon la revendication 7, **caractérisée en ce que** la surface d'étanchéité (34) est pourvue sur un corps de fermeture (38), préférablement un cylindre circulaire massif, constitué au moins principalement en un matériau (M) déformable par rapport à la surface de siège (33), préférablement en matière plastique, en métal non ferreux, en alliage métallique, en métal léger ou en alliage de métaux légers.

9. Vanne à siège de régulation selon la revendication 7, **caractérisée en ce que** la surface de siège (33) comporte une circonférence circulaire, avec le passage (32) sous forme d'un perçage en son centre, et une surface prédéterminée, et **en ce que** la surface de la surface d'étanchéité (34) est au moins égale à la surface prédéterminée de la surface de siège (33).

10. Vanne à siège de régulation selon la revendication 7, **caractérisée en ce que** la surface d'étanchéité (34) est constituée en une matière plastique, telle que le PTFE ou un polyamide à renfort de fibre de verre, et **en ce que** la surface de siège (33) est constituée en acier et présente une rugosité avec un indice de rugosité compris entre environ Rz 1 et Rz 5.

11. Vanne à siège de régulation selon la revendication 10, **caractérisée en ce que** la surface d'étanchéité (34) est tournée et la surface de siège (33) est durcie et meulée, préférablement avec un grain d'outil de meulage prédéterminé, avec un nombre de passes de meulage prédéterminé et une direction de passe de meulage unique.

12. Vanne à siège de régulation selon au moins l'une des revendications 7 à 11, **caractérisée en ce que** la grandeur et la rugosité de la surface de siège (33), le rapport de déformation de la surface d'étanchéité (34) et la pression de contact sont déterminés les uns par rapport aux autres dans une plage de variation prédéterminée de telle sorte que le débit volumétrique peut être réglé dans une plage de pression d'entrée comprise entre environ 100 bars et environ 300 bars, entre 0,001 l/min et 0,15 l/min, et préférablement entre 0,05 l/min et 0,1 l/min.

13. Vanne à siège de régulation selon au moins l'une des revendications 7 à 12, **caractérisée en ce que** la surface d'étanchéité (34) peut être comprimée par un électro-aimant proportionnel (24) dont l'induit (35) peut être actionné au moins essentiellement sans déplacement de levage en direction de fermeture de la surface d'étanchéité (34) et positionné avec une extrémité de contact (43) dans la plage d'une induction magnétique maximale par rapport à un noyau de pôle (36).
